# EUROPEAN PATENT APPLICATION

(11) **EP 1 814 328 A1**
(43) Date of publication of application: **01.08.2007**
(21) Application number: 05755723.3
(22) Date of filing: 29.06.2005
(51) Int. Cl.: H04N 5/93, G11B 20/10, G11B 27/10

(54) **PICTURE PRODUCING DEVICE AND METHOD, RECORDING MEDIUM, AND PICTURE REPRODUCING PROGRAM**

(30) Priority: 19.08.2004 JP 2004239193
(71) Applicant: Sony Computer Entertainment Inc., Tokyo 107-0062 (JP); SONY CORPORATION, Minato-ku Tokyo 108-0075 (JP)
(72) Inventor: KAKUMU, Tatsuya c/o SONY COMPUTER ENT. INC., Tokyo 1070062 (JP); FUJINAMI, Yasushi c/o SONY CORPORATION, Minato-ku, Tokyo 108-0075 (JP); HAMADA, Toshiya c/o SONY CORPORATION, Minato-ku, Tokyo 108-0075 (JP)
(74) Representative: Müller, Frithjof E.
(86) International application number: PCT/JP2005/011977
(87) International publication number: WO 2006/018933

(57) **Abstract**

Continuous reproduction conforming to the intention of the content creator is realized. A reproduction control section (206) reproduces a video content previously recorded on an recording medium. A script control section (202) interprets and executes a script program including an event handler executed when an event occurs. A data storage section (212) has an area where stored is backup information on the reproduction status which is information used for carrying out continuous reproduction continuing with the last time of the video content reproduced in the past. The script control section (202) gives an instruction to carry out continuous reproduction of the video content according to the information on the reproduction status (232) when an event occurs in the reproduction control section (206).

## Description

### TECHNICAL FIELD

The present invention relates to a picture reproducing technology for reproducing and displaying picture contents recorded on a recording medium such as a disk.

### BACKGROUND ART

Picture reproducing apparatuses which reproduce moving image, game, and other contents recorded on a disk-shaped recording medium such as a DVD have become prevalent in recent years. With read-only DVD video specifications, button images and the like arranged on a menu screen are used to achieve user-interactive functions. For example, a menu screen can be called up by using a remote controller or the like during the reproduction of a DVD-video moving image, so that button images appearing on the menu screen can be selected so as to perform such processing as changing the scene to play.

Recording media such as DVDs are generally capable of recording a large volume of data, and it is therefore possible to reproduce picture contents from such media for a long period of time. The longer the duration of picture contents have, the more difficult it is for the entire contents to be viewed in a single session. This can increase the number of times a users stops the reproduction of the picture contents. It is inconvenient for users to have to search for the play point reached previously by using a fast-forward function or the like each time play of the contents are resumed. Some DVD players are therefore provided with the function of storing the point where reproduction of picture contents is stopped, so that the play of the contents, when reproduced the next time, is resumed from that previous point where the reproduction is stopped (hereinafter, such a function will be referred to as "continue play").

### DISCLOSURE OF THE INVENTION

### PROBLEMS TO BE SOLVED BY THE INVENTION

However, the continue play function described above is not a function defined by the DVD specifications but one provided by each individual DVD player. The operation can therefore vary from one model to another. In addition, depending on the type of picture contents, it is sometimes desired to perform reproduction in a particular way intended by the contents creators.

The present invention has been made in view of the foregoing problems, and a general purpose thereof is to provide a picture reproduction technology capable of realizing a continue play as intended by contents creators in a picture reproducing apparatus of a recording medium such as a DVD disk.

### MEANS TO SOLVE THE PROBLEMS

One embodiment of the present invention provides a picture reproducing apparatus. This apparatus includes: a reproduction control unit which reproduces picture contents prerecorded on a recording medium; a script control unit which interprets and executes a script program prerecorded on the recording medium, the script program including an event handler to be executed when an event occurs in the reproduction control unit; and a storage unit which has an area for storing a reproduction status which is information for performing a continue play whereby previously reproduced picture contents are reproduced from a point at which they are left off last time. Then, the script control unit refers to the reproduction status and causes the reproduction control unit to perform a continue play of the picture contents in response to the occurrence of the event in the reproduction control unit.

According to this embodiment, operation at the time of a continue play is described as the script program on the recording-medium side while the reproduction status, i.e., information necessary for performing the continue play, is stored in the picture reproducing apparatus. The script program can therefore be created as appropriate to realize a continue play in a manner intended by contents creators.
Here, possible examples of the "reproduction status" include a playlist number, the file number of a picture stream under operation, and a play time.

The script program may include a first event handler for reproducing the picture contents from the beginning and a second event handler for referring to the reproduction status and performing a continue play. In this case, the script control unit, when loading a recording medium, searches the storage unit for a reproduction status corresponding to the picture contents recorded on the recording medium, and selects and executes either one of the two event handlers depending on the presence or absence of the corresponding reproduction status.

Consequently, different event handlers are selected and executed depending on the presence or absence of the reproduction status. It is therefore possible, for example, to exercise such a control that the first event handler is executed upon the first play and the second event handler on the second and subsequent plays. For example, the "first event handler" corresponds to the "onAutoPlay() event handle" in the embodiment and the "second event handler" the "onContinuePlay() event handler."

The storage unit may have an area for storing user data which is information dependent on the picture contents. In this case, the script control unit, when executing the second event handler, may perform a continue play using the user data. Consequently, various types of contents-specific data can be stored in the picture reproducing apparatus in accordance with the intention of the contents creators, so that this user data is acquired for the next play. This allows the picture reproducing apparatus to perform more complicated operations at the time of a continue play.

The script program may further include a third event handler to be executed in accordance with an end event in the reproduction control unit. In this case, the script control unit will manipulate information of the reproduction status or the user data by executing the third event handler. Consequently, since the third event handler is written as an event handler to be executed in response to the end event, it is possible to achieve an operation intended by the contents creators even at the end of reproduction of the picture contents. For example, the "third event handler" corresponds to the "onExit() event handler" according to the embodiment.

It should be appreciated that any conversions of expressions of the present invention between methods, systems, computer programs, recording media, and the like are also intended to constitute applicable embodiments of the present invention.

### ADVANTAGES OF THE INVENTION

According to the present invention, the operation at the time of a continue play is described as the script program on the recording-medium side while the reproduction status, i.e., information necessary for performing the continue play, is stored in the picture reproducing apparatus. The script program can thus be created as appropriate to realize a continue play in a manner intended by the contents creators.

### BRIEF DESCRIPTION OF THE DRAWINGS

Fig. 1 is a hardware block diagram of a picture reproducing apparatus according to an embodiment of the present invention;
Fig. 2 is a diagram showing an example of the data structure of data files stored in a disk;
Fig. 3 is a diagram showing a model for explaining the operation of a script file;
Fig. 4 is a diagram showing an example of the script file;
Fig. 5 is a functional block diagram of the picture reproducing apparatus according to the embodiment of the present invention;
Fig. 6 is a flowchart for pre-reproduction processing of the picture reproducing apparatus;
Fig. 7 is a flowchart for interpreting and executing a script; and
Fig. 8 is a flowchart for reproduction end processing of the picture reproducing apparatus.

### BEST MODE FOR CARRYING OUT THE INVENTION

### First Embodiment

A first embodiment relates to a picture reproducing apparatus which reproduces and displays audio and video contents recorded on a recording medium such as a DVD disk. Apparatus of this type switches and displays a reproduction of main contents such as the main story of a motion picture, a menu screen for selecting scenes to play, and a screen for setting image quality, sound quality, etc.

Hereinafter, the configuration of the picture reproducing apparatus and the recording medium according to the first embodiment will be described. Then, typical operations of the picture reproducing apparatus will be described. Finally, a detailed description will be given of the switching of reproduction modes and a resume play according to the present invention.

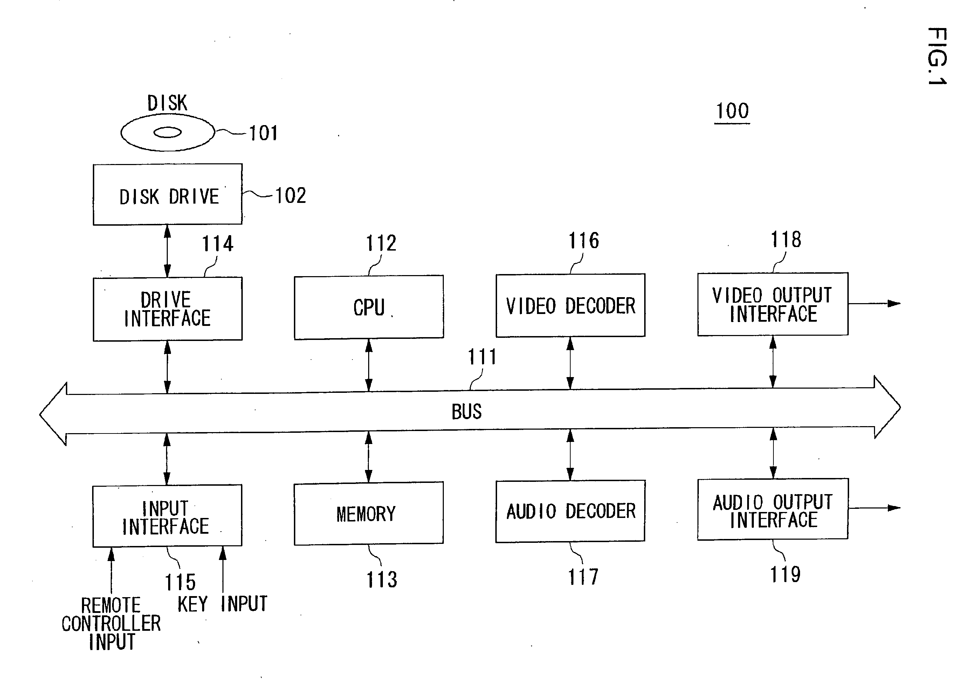

Fig. 1 is a hardware block diagram of a picture reproducing apparatus 100 according to the first embodiment. A disk 101 is a disk-shaped recording medium on which contents data and data necessary for reproduction are recorded. When the disk 101 is loaded into a disk drive 102, the data are read and the picture reproduction apparatus 100 starts reproducing picture contents. It should be appreciated that non-disk media such as a memory card or a memory cartridge may be used as the recording medium.

The disk drive 102 is connected to a drive interface 114. Read and other commands are transmitted from the drive interface 114 to the disk drive 102. The disk drive 102 operates in accordance with the commands, and sends read data and the like to the drive interface 114.

A CPU 112, a memory 113, the drive interface 114, an input interface 115, a video decoder 116, an audio decoder 117, a video output interface 118, and an audio output interface 119 are mutually connected through a bus 111.

The CPU 112 controls the operation of the entire picture reproducing apparatus 100. The memory 113 is used as a buffer for the contents data, and also used to store disk-specific information to be described later. The video decoder 116 and the audio decoder 117 decode video data and audio data read from the disk 101, respectively. The decoded video data is output from a not-shown video output terminal via the video output interface 118. Similarly, the decoded audio data is output from a not-shown audio output terminal via the audio output interface 119.

Key inputs provided on a operation panel (not-shown) of the picture reproducing apparatus 100 and input signals from a remote controller (not-shown) are input to the input interface 115, which sends this information to various types of devices.

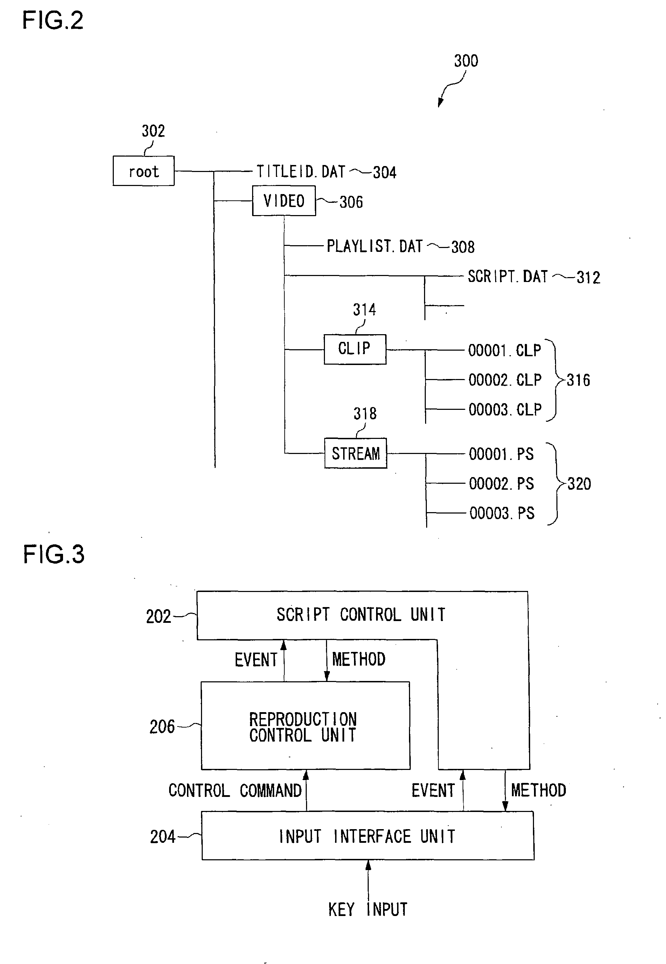

Fig. 2 shows the data structure of data files 300 stored in the disk 101. The data files 300 are hierarchically managed in a directory structure. Hereinafter, each of the data files will be overviewed.

A root directory 302 which represents the root of the file system contains a TITLEID.DAT file 304, which is title information on the contents, and a VIDEO directory 306. This VIDEO directory 306 contains two data files, i.e., a PLAYLIST.DAT file 308 and a SCRIPT.DAT file 312, and two directories, i.e., a CLIP directory 314 and a STREAM directory 318.

The TITLEID.DAT file 304 is a file having a title identifier (ID) which varies from one contents type to another. A single disk typically has one TITLEID.DAT file 304, whereas one disk may have two or more TITLEID.DAT files 304.

The PLAYLIST.DAT file 308 describes a playlist for specifying the order of reproduction of picture streams.

The SCRIPT.DAT file 312 is a script file which describes a script program. This SCRIPT.DAT file 312 is one to be read into a script control unit (which will be described later) prior to reproduction of the contents, in order to make the mode of reproduction of the disk 101 interactive. Detailed description thereof will be given later. The script file also contains information for specifying the screen layout of menu screens.

The CLIP directory 314 contains one or more data files, such as 00001. CLP, 00002.CLP, ... (hereinafter, these will be referred to as "clip information files"). The STREAM directory 318 also contains one or more data files, such as 00001.PS, 00002.PS, ... (hereinafter, these will be referred to as "clip stream files").

The clip stream files contain MPEG-2 program streams in which video, audio, and subtitle elementary streams are multiplexed. The clip stream files are created by performing compression and time division multiplexing on video and audio signals. The clip information files describe the properties and the like of the clip stream files that have filenames of the same numerals, respectively. The playlist mentioned above specifies the clip information files that have the same filenames as those of the clip stream files to be reproduced on this playlist. The picture reproducing apparatus 100 refers to the playlist to acquire information on the clip stream files, and then reads the corresponding clip stream files for decoding. It can thereby obtain a video signal, a subtitle signal, and an audio signal.

In this embodiment, the video elementary streams will be described as being MPEG2-Video. Nevertheless, the present embodiment is also applicable to MPEG4-Visual, MPEG4-AVC, and the like. Moreover, while the audio elementary streams will be described as being ATRAC audio, the present embodiment is also applicable to MPEG1/2/4 audio etc.

The present embodiment is characterized in that the script file recorded on the disk is interpreted by the script control unit in the picture reproducing apparatus 100, and the contents reproduction is performed in accordance with that program. In this example, the script file is written in an extended script language based on a known language specification "ECMAScript." The script file is composed of reproduction instructions for clip stream files and a series of commands for setting the picture reproducing apparatus. These commands make it possible to select any one of a plurality of prepared playlists or to perform reproduction of a playlist that contains conditional branches. Since such a script file is recorded on the disk, the picture reproducing apparatus implements interactive functions with users.

Next, the exchange of commands between the script file and the reproduction control unit will be described with reference to Fig. 3. Fig. 3 is a diagram showing a model of the picture reproducing apparatus 100 for the purpose of explaining operations according to the script file. The picture reproducing apparatus 100 initially reads the script program, the playlist, and the clip information files from the disk 101, and reads and reproduces clip stream files in the order of reproduction defined thereby.

According to the language specifications of the script program, the functional block that reproduces the playlist is implemented as an "object." As employed herein, this object for reproducing the playlist and controlling video, audio, and subtitle reproduction will be referred to as a reproduction control unit 206. Commands for instructing reproduction of the playlist and setting of the picture reproduction apparatus make methods of this reproduction unit 206. The reproduction control unit 206 is controlled by the methods from the script control unit 202, which requires the function of notifying a shift in state and the start position of reproduction from the reproduction control unit 206 to the script control unit 202. This corresponds to issuing an event to the script control unit 202, and the processing corresponding to the event is written as an event handler.

In accordance with the commands from the input interface unit 204 caused by user's key inputs and the like, and the methods from the script control unit 202, the reproduction control unit 206 reads, decodes, and reproduces clip stream files based on the playlist and the clip information. The reproduction control unit 206 has three input and output paths, i.e., a path for accepting commands from the input interface unit 204, a path for notifying events to the script control unit 202, and a path for accepting methods from the script control unit 202.

The script control unit 202 executes a script and controls the reproduction control unit 206. The script control unit 202 receives events from the reproduction control unit 206 and issues methods. The script control unit 202 also receives events corresponding to user's key inputs from the input interface unit 204.

The input interface unit 204 accepts a key input made by the user, and determines whether this key input is a command to the reproduction control unit 206 or a command corresponding to a button that is drawn and displayed by the script. If the key input is a command to the reproduction control unit 206, the input interface unit 204 converts the user input into a control command to the reproduction control unit 206 and issues the command to the unit 206. If the key input is a command to a GUI component that is drawn and displayed by the script, the input interface unit 204 notifies the key input to the script control unit 202 as an event.

As has been described, for the purpose of role sharing, the reproduction control unit 206 controls video, audio, and subtitle decoding and display while the script control unit 202 arranges and displays GUI (Graphic User Interface) components such as buttons and executes processing when the GUI components are pressed.

Next, a description will be given of the event model of the reproduction control unit 206. The reproduction control unit 206 produces various events while reproducing the playlist. This event production causes the execution of processing programs called event handlers. These event handlers must be implemented in a script language by contents creators. Such a program execution model whereby events are produced on an irregular basis and processing programs start to execute upon the event production is called an "event-driven model."

In this embodiment, event handlers are prepared for respective events to be produced by the reproduction control unit 206. More specifically, a processing program to be performed when an event A occurs is determined to have a structure of onEventA (), and its contents can be implemented by contents creators. For example, a Chapter mark is set at the top of the playlist, and a Chapter event occurs when reproduction starts from the top of the playlist. Moreover, a Chapter event is notified to the script control unit 202 upon each Chapter transition, and the corresponding event handler onChapter() is executed. When the reproduction reaches the end of the playlist, the reproduction is paused at the end and a PlayListEnd event is notified to the script control unit 202. In the onPlayListEnd() event handler, the script control unit 202 instructs to start reproducing another playlist. As above, since a model is constructed such that the information transmission from the reproduction control unit 206 to the script control unit 202 is effected by events and the control from the script control unit 202 to the reproduction control unit 206 is effected by methods, it is possible to control the reproduction of clip stream files by the script program.

The foregoing model makes video, audio, and subtitle reproduction possible, and events can be produced at certain times during reproduction preset by contents creators so that event handlers provided in advance are executed to achieve the operations intended by the contents creators. Moreover, since the input interface unit 204 notifies events to the script control unit 202 when it receives user's key inputs, it is also possible to execute operations prepared by the contents creators according to the user operations.

When there is no event handler written by the contents creators, a predetermined built-in operation (default event handler) will be performed or the event will be ignored without any execution. Events may be ignored intentionally by writing no event handler for the events where it is unnecessary to perform any processing at all.

Suppose a model in which a processing program will be called no matter what event occurs. In such a model, the preprocessing of checking which event has occurred and switching between the processing routines provided for respective events must be written in the processing program. Since a processing program like this must be implemented by contents creators, there might occur the problem of greater burdens on the contents creators despite the simple model.
In addition, since the single large processing program is called up frequently, it might occupy a large volume of memory with the consequent problem of a drop in execution speed. In contrast, the model of preparing event-specific processing programs, i.e., event handlers, can reduce the foregoing problems.

As has been described, it is one of the characteristics of the first embodiment that user input events can shift the state of the reproduction control unit 206 and even trigger a new event so that the newly produced event is used for various processing.

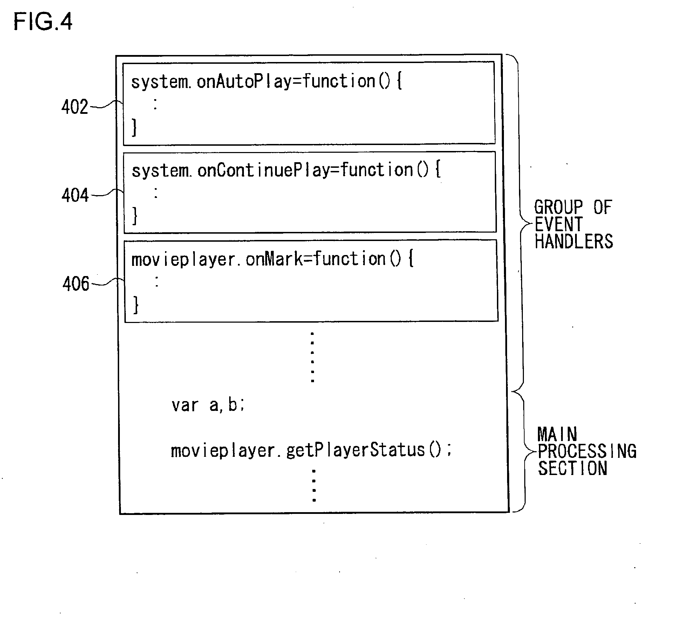

Next, an example of the configuration of the script file will be described with reference to Fig. 4. As shown in the diagram, the script file is composed of several groups of event handlers and a main processing section.

The onAutoPlay () event handler 402 is an auto-execute event handler, and is executed automatically when the disk is loaded in. The onContinuePlay () event handler 404 is an event handler for implementing a resume play. Furthermore, the onMark () event handler 406 is an event handler to be performed when a marked time is reached during reproduction.

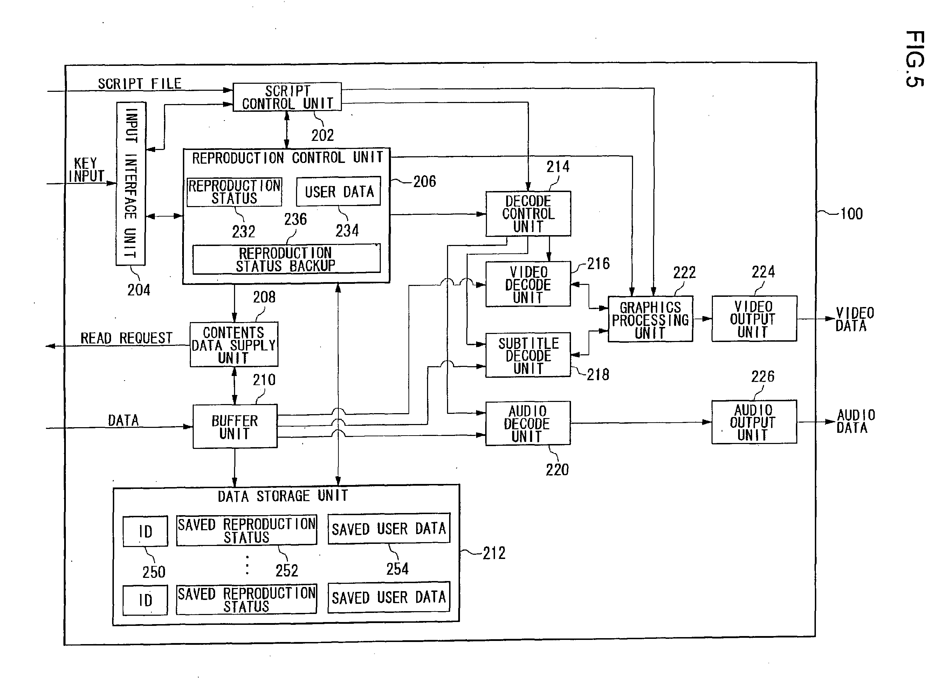

Fig. 5 is a functional block diagram of the picture reproduction apparatus 100 which is achieved by cooperation of the foregoing hardware configuration and the script program.

When the picture reproduction apparatus 100 is powered on, a operating system (not-shown) initially starts up to perform necessary processing such as initialization, and calls a video contents reproducing program (not-shown). This video contents reproducing program performs basic functions such as checking whether or not the recorded data are video contents when the disk 101 is loaded in, reading the script file and supplying it to the script control unit 202, and supplying read data to the reproduction control unit 206. While the video contents reproducing program is in operation, the operating system operates the disk drive 102 via the drive interface 114 to provide such services as a file read from the disk 101.

The script control unit 202 interprets and executes the script program which is written in the script file. As mentioned above, the script file can describe the operations for operating the graphics processing unit 222 to create images such as a menu screen, and for controlling the reproduction control unit 206 in accordance with signals from user interfaces.

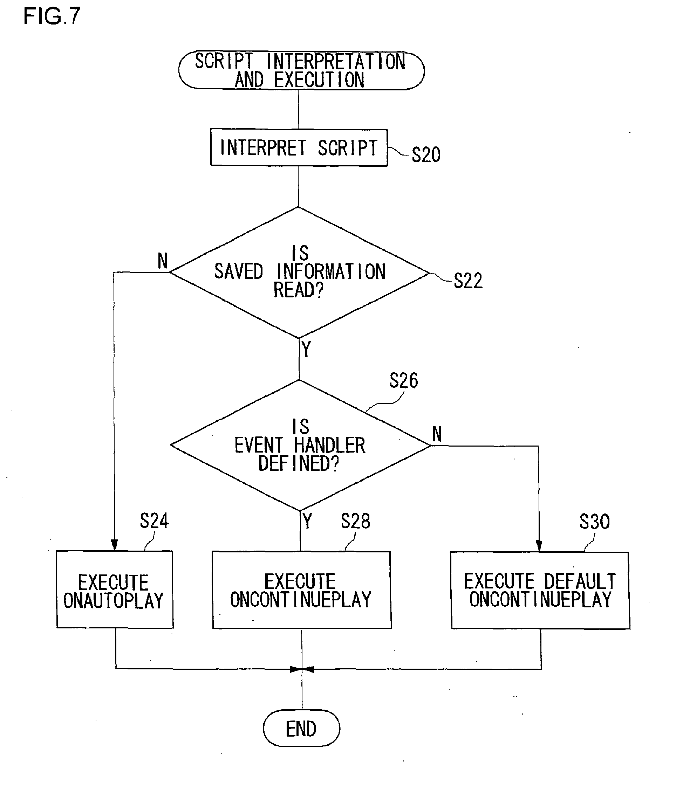

The reproduction control unit 206 refers to the data written in the disk 101 and exercises control as to the reproduction of the video contents. The reproduction control unit 206 also performs operations such as switching picture streams according to an instruction from the script control unit 202 or the input interface unit 204.
The reproduction control unit 206 has storage areas called reproduction status 232, user data 234, and reproduction status backup 236. The reproduction status 232 contains information pertaining to the playlist number, the play time, and the like of a playlist under reproduction. The user data 234 contains information which the contents creators intend to store depending on the contents. When a normal mode shifts to a menu mode (which will be described later), the information in the reproduction status 232 is backed up to the reproduction status backup 236 immediately before the menu mode is entered. The usages of the reproduction status 232, the user data 234, and the reproduction status backup 236 will be described later in conjunction with the flowcharts of Figs. 7 to 12.

A contents data supply unit 208 reads clip stream files from the disk 101, and supplies and accumulates them to a buffer unit 210. Then, it supplies the clip stream files according to requests from a video decode unit 216, an audio decode unit 220, a subtitle decode unit 218, etc. It also reads files from the disk 101, taking account of the amount of data accumulated in the buffer unit 210. The buffer unit 210 uses part of the storage area of the memory 113 exclusively for its buffering area.

The data storage unit 212 makes the operations of writing and reading data specified by the reproduction control unit 206 to/from an area where it will not be erased even when the video contents reproducing program terminates. The data storage unit 212 has storage areas each called title ID 250, saved reproduction status 252, and saved user data 254. The information in the reproduction status backup 236 of the reproduction control unit 206 is recorded into the saved reproduction status 252. The information in the user data 234 of the reproduction control unit 206 is recorded into the saved user data 254. The data storage unit 212 has areas for a plurality of titles. More specifically, the data storage unit 212 can retain saved reproduction statuses and saved user data corresponding to the contents of a plurality of titles at once. These pieces of data are configured so that they can be searched for data corresponding to the contents of a disk by using the title IDs 250 as keys.

A decode control unit 214 controls the operations of the video decode unit 216, the subtitle decode unit 218, and the audio decode unit 220. The decode control unit 214 also has an internal clock, and manages synchronization between video and audio outputs.

The video decode unit 216 controls the video decoder 116 and decodes input video streams. It also outputs video data generated as the result of decoding to the graphics processing unit 222. Similarly, the audio decode unit 220 controls the audio decoder 117 and decodes input audio streams. It also outputs audio data generated as the result of decoding to an audio output unit 226.

The subtitle decode unit 218 decodes input subtitle streams, and outputs subtitle image data generated as the result of decoding to the graphics processing unit 222.

The graphics processing unit 222 receives both the video data from the video decode unit 216 and the subtitle image data from the subtitle decode unit 218. The graphics processing unit 222 zooms in/out the subtitle image data and adds it to the video data according to control commands, and performs zoom-in/out further to fit to the video output. The resulting image is output to a video output unit 224. In addition, the graphics processing unit 222 creates menus and messages according to instructions from the script control unit 202 and the reproduction control unit 206, and overlays them on the video signal for output. Furthermore, the graphics processing unit 222 performs aspect conversion on the output signal in accordance with the aspect ratio of an output video device specified in advance and the output aspect ratio specified in the contents.

The video output unit 224 uses part of the memory 113 as a FIFO, thereby temporarily storing the input video data and outputting it from the video output interface 118. Similarly, the audio output unit 226 uses part of the memory 113 as a FIFO, thereby temporarily storing the input audio data and outputting it from the audio output interface 119.

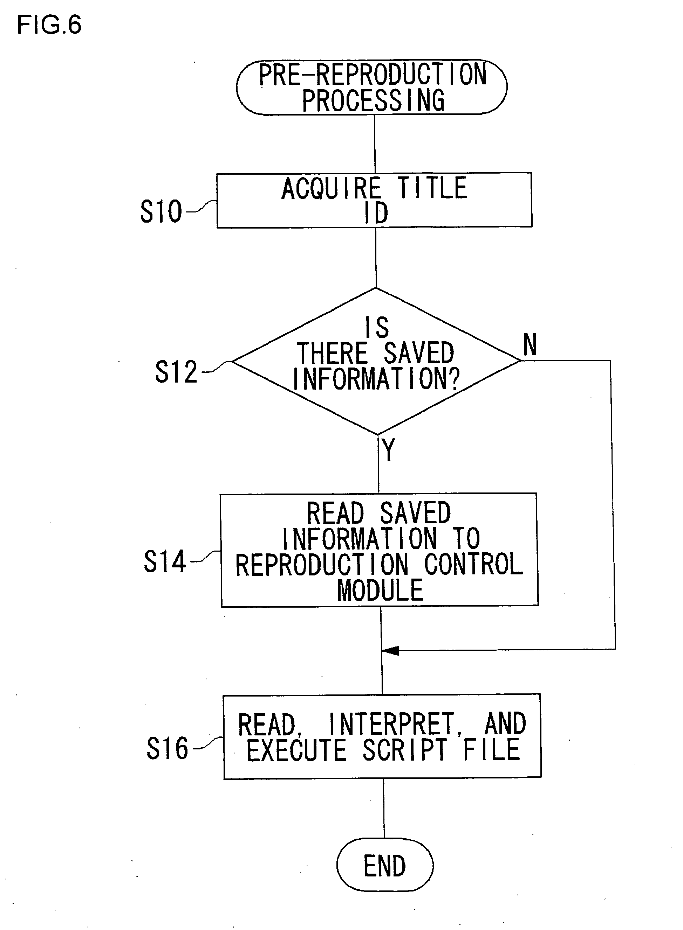

Next, with reference to Figs. 6 to 8, a description will be given of a method for realizing a continue play according to the present invention.

Fig. 6 is a flowchart showing the pre-reproduction processing of the picture reproducing apparatus 100. When a disk 101 is loaded into the disk drive 102 and the video contents reproducing program starts operating, the contents data supply unit 208 supplies the TITLEID.DAT file recorded on the disk 101 to the reproduction control unit 206. The reproduction control unit 206 acquires the title ID in the TITLEID.DAT file (S10).

The data storage unit 212 searches for the saved reproduction status 252 and the saved user data 254 (hereinafter, these will sometimes be referred to collectively as "saved information") by using the acquired title ID as a key (S12). If the data storage unit 212 contains the saved information (Y at S12), the reproduction control unit 206 reads the saved reproduction status 252 and the saved user data 254 in the data storage unit 212 into the reproduction status 232 and the user data 234 in the reproduction control unit 206, respectively (S14).

After the saved information is read or if the data storage unit 212 contains no saved information (N at S12), the contents data supply unit 208 requests the not-shown operating system to read the SCRIPT.DAT file. The SCRIPT.DAT file is read from the disk 101 to the script control unit 202, and the file is interpreted and executed (S16).

Fig. 7 is a flowchart for explaining the procedure for interpreting and executing the SCRIPT.DAT file at S16 of Fig. 6. On the first execution, the script control unit 202 executes the SCRIPT.DAT file read from the disk in sequence from the top. Before the first execution is completed, the execution of event handlers is suppressed so that the script control unit 202 performs no event processing. After completion of the first execution, the execution of event handlers is permitted so that the event handlers written in the script file are executed automatically. This makes it possible to start disk reproduction at the same time when the disk 101 is loaded, even if the user does not give any explicit instruction for reproduction.

Initially, the script control unit 202 interprets the SCRIPT.DAT file (S20). Subsequently, the script control unit 202 determines whether or not saved information is read from the data storage unit 212 to the reproduction control unit 206 (S22).

In the present embodiment, two event handlers, i.e., an onAutoPlay () event handler for reproducing contents from the beginning and an onContinuePlay () event handler for performing a continue play, are prepared to be executed automatically. If no saved information is read (N at S22), which is considered to correspond to a normal start of reproduction, then the script control unit 202 executes the onAutoPlay () event handler (S24). Since reproduction cannot be started unless this onAutoPlay () event handler is written in the script file, the contents creators preferably write this event handler.

If the saved information is read (Y at S22), the currently loaded disk is considered to have already been reproduced at least once. Then, whether or not an onContinuePlay () event handler is written in the SCRIPT.DAT file is determined (S26). If any onContinuePlay () event handler is written (Y at S26), the script control unit 202 executes the onContinuePlay () event handler to start a continue play (S28). This event handler causes the reproduction control unit 206 to read the information on the reproduction status 232 and the user data 234, and start reproduction in accordance with the information. This onContinuePlay() event handler can be written as appropriate to realize a continue play in a manner intended by the contents creators.

If no onContinuePlay() event handler is written in the SCRIPT.DAT file (N at S26), the script control unit 202 executes a default onContinuePlay() event handler (S30). This event handler causes the reproduction control unit 206 to start reproduction from the playlist number or play time stored in the reproduction status 232.

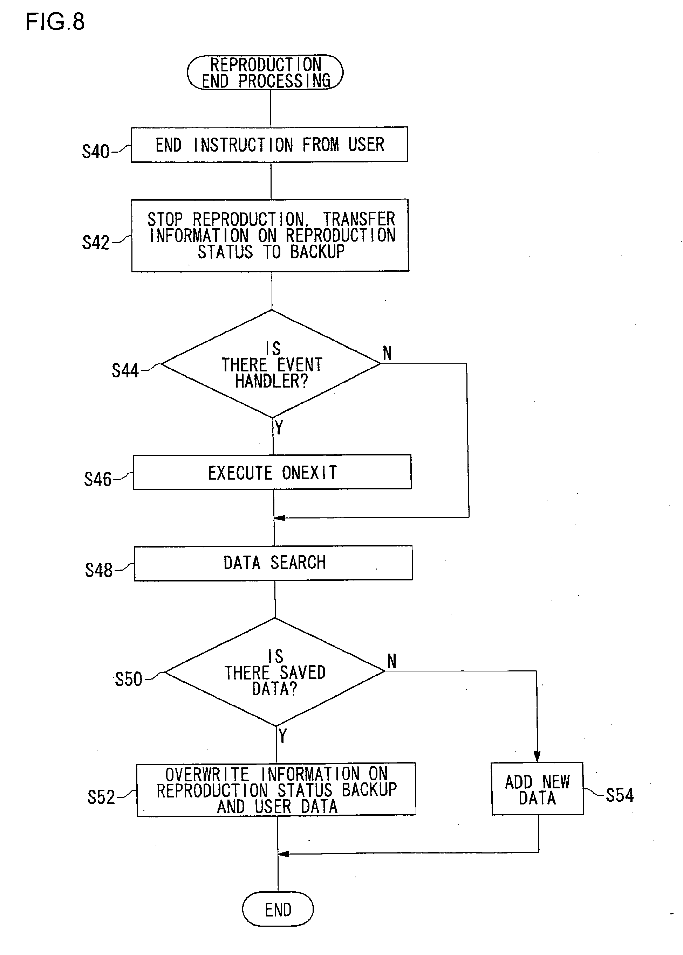

Fig. 8 is a flowchart showing operation of the picture reproducing apparatus when the video contents reproducing program ends. As employed herein, "end" refers to not only stopping the reproduction of the contents but also terminating the execution of the script program.

When the reproduction control unit 206 receives the input of an instruction to end the video contents from the user (S40), it stops reproducing the contents, saves the information in the reproduction status 232 to the reproduction status backup 236, and makes ending preparations such as suppressing the occurrence of new events and discarding event handlers waiting for execution (S42). Then, it is determined whether or not an onExit() event handler to be executed immediately before the end of the video contents reproducing program is written in the SCRIPT.DAT file (S44). If no onExit() event handler is written (N at S44), S46 is skipped. If any onExit () event handler is written (Y at S44), the script control unit 202 receives an exit event and executes the onExit() event handler which is the operation for that event (S46). Here, the "exit event" is an event to be notified to the script control unit 202 when an instruction to end the video contents is given. The script control unit 202 can receives this event to perform desired end processing within the onExit() event handler.

The kind of operation that is written in the onExit() event handler depends on the intention of the contents creators. For example, it is possible to make an operation for not only saving the information in the reproduction status backup 236, which indicates the status of reproduction, but also saving additional information into the user data 234 so that it can be used for the next play. Moreover, it is also possible to write an operation such that the information in the reproduction status backup 236 and the user data 234 is erased so as to perform reproduction from the beginning, instead of a continue play, at the time of the next play.

Next, the data storage unit 212 searches for saved information with the title ID as a key (S48). If there is any saved information (Y at S50), the information in the reproduction status backup 236 and the user data 234 is overwritten to the saved reproduction status 252 and the saved user data 254 of the same title ID (S52). If there is no saved information (N at S50), the information in the reproduction status backup 236 and the user data 234 is newly stored as the saved reproduction status 252 and the saved user data 254 of the current title ID, respectively (S54).

As has been described, according to the present embodiment, the operation at the time of a continue play is described as the script program on the recording-medium side while the reproduction status, i.e., information necessary for performing the continue play, is stored in the picture reproducing apparatus. The script program can therefore be created as appropriate so as to realize a continue play in a manner intended by the contents creators.

Furthermore, since the default onContinuePlay () event handler, i.e., the default operation for a continue play, is implemented in the picture reproducing apparatus, it is possible to perform a continue play even if no onContinuePlay() event handler, i.e., no operation for a continue play has been written in the script file by the contents creators.

Moreover, when an event handler to be executed in response to the end event (onExit() event handler) is written in the script file, it is possible to achieve an operation intended by the contents creators even at the end of reproduction of the contents.

Up to this point, the present invention has been described in conjunction with the embodiment thereof. These embodiments have been given solely by way of illustration.
It will be understood by those skilled in the art that various modifications may be made to combinations of the foregoing components and processes, and all such modifications are also intended to fall within the scope of the present invention. Hereinafter, such modifications will be described.

The embodiment has dealt with the case where the reproduction control unit 206 in the picture reproducing apparatus 100 is provided with the areas for recording the reproduction status and the user data. Alternatively, the recording medium to be reproduced by the picture reproducing apparatus, such as a disk, may be provided with the areas for recording the reproduction status and the user data, and the reproduction control unit 206 may be configured to read those pieces of information in the recording medium. It follows that the information necessary for a continue play is recorded on the recording medium. Thus, once reproduction is stopped, the recording medium can be removed from the picture reproducing apparatus and reproduced even by another picture reproducing apparatus for a continue play if both the picture reproducing apparatuses are configured as in the foregoing embodiment.

When performing a continue play, the time may be rewound from the last end point of reproduction instead of resuming from that last end point. For example, when storing the time into the saved reproduction status 252 as the reproduction information of the reproduction status 232, an information-modifying command such as "change the time to five minutes before" can be written in the onExit() event handler at S46 of Fig. 8 so that the time is rewound for reproduction upon the next play. This makes it easier for users to remember the picture contents that have been reproduced previously.

The onContinuePlay () event handler at S28 of Fig. 7 may describe a command which causes conditional branching of operation during a continue play depending on a predetermined title ID which is specified by the script written in the disk. For example, it is possible to configure so that the contents creators can easily select operations such as 1) performing a normal continue play from the end point of the previous play, 2) disabling a continue play and always reproducing from the top of the disk, and 3) rewinding the time for reproduction from the end point of the previous play. Consequently, when reproduction of, e.g., movie contents is ended during a certain scene such as a climax, it is possible to reproduce from the beginning of the climactic scene. Moreover, game, quiz, and other contents may be reproduced with such effects as disabling a continue play if the reproduction is ended at a certain scene, and forcing reproduction from the beginning or a certain point for the next play.

The script control unit, when executing the onContinuePlay() event handler, may perform a continue play using user data. Consequently, various types of contents-specific data can be stored in the picture reproducing apparatus according to the intention of the contents creators, so that this user data is acquired for the next play. This allows the picture reproducing apparatus to perform more complicated operations at the time of a continue play. For example, when a user chooses to end quiz contents under reproduction, it is possible to direct that answers made by the user so far are stored as the saved user data 254, and the results of those previous answers are carried over at the time of a continue play.

### INDUSTRIAL APPLICABILITY

According to the present invention, the operation at the time of a continue play is described as the script program on the recording-medium side while the reproduction status, i.e., information necessary for performing the continue play, is stored in the picture reproducing apparatus. The script program can therefore be created as appropriate to realize a continue play in a manner intended by the contents creators.

## Claims

1. A picture reproducing apparatus comprising:
a reproduction control unit which reproduces picture contents prerecorded on a recording medium;
a script control unit which interprets and executes a script program prerecorded on the recording medium, the script program including an event handler to be executed when an event occurs in the reproduction control unit; and
a storage unit which has an area for storing a reproduction status which is information for performing a continue play whereby previously reproduced picture contents are reproduced from a point at which they are left off last time, wherein
the script control unit refers to the reproduction status and causes the reproduction control unit to perform a continue play of the picture contents in response to the occurrence of the event in the reproduction control unit.

2. The picture reproducing apparatus according to claim 1, wherein:
the script program includes a first event handler for reproducing the picture contents from the beginning and a second event handler for referring to the reproduction status and performing a continue play; and
the script control unit, when loading a recording medium, searches the storage unit for a reproduction status corresponding to the picture contents recorded on the recording medium, and selects and executes either one of the two event handlers depending on the presence or absence of the corresponding reproduction status.

3. The picture reproducing apparatus according to claim 2, wherein the script control unit has a default event handler to be executed when the script program does not include the second event handler.

4. The picture reproducing apparatus according to claim 3, wherein:
the storage unit further has an area for storing user data which is information dependent on the picture contents; and
the script control unit, when executing the second event handler, performs a continue play using the user data.

5. The picture reproducing apparatus according to claim 1, wherein
the script program further includes a third event handler to be executed in accordance with an end event in the reproduction control unit; and
the script control unit manipulates information of the reproduction status or the user data by executing the third event handler.

6. A picture reproducing method for reproducing picture contents prerecorded on a recording medium, wherein
a command for performing a continue play whereby previously reproduced picture contents are reproduced from a point at which they are left off last time is recorded on the recording medium.

7. A picture recording medium containing:
picture contents to be reproduced by a picture reproducing apparatus; and
a program which includes a first event handler for reproducing the picture contents from the beginning and a second event handler for performing a continue play to reproduce previously reproduced picture contents from a point at which they are left off last time, wherein
either one of the two event handlers is selected and executed in accordance with an event occurring in the picture reproducing apparatus.

8. A picture reproducing program for causing a picture reproducing apparatus to reproduce picture contents prerecorded on a recording medium,
the picture reproducing program comprising:
a reproduction step of reproducing the picture contents;
a step of storing a reproduction status when ending reproduction, the reproduction status being information for reproducing the reproduced picture contents from a point at which they are left off;
a script execution step of interpreting and executing a script program prerecorded on the recording medium, the script program including an event handler; and
a step of referring to the reproduction status and performing a continue play of the picture contents in accordance with the script program in response to the occurrence of an event.

9. A recording medium containing a picture reproducing program to be executed by a picture reproducing apparatus,
the picture reproducing program comprising:
a reproduction step of reproducing picture contents stored in another recording medium;
a step of storing a reproduction status when ending reproduction, the reproduction status being information for reproducing the reproduced picture contents from a point at which they are left off;
a script execution step of interpreting and executing a script program prerecorded on the recording medium, the script program including an event handler; and
a step of referring to the reproduction status and performing a continue play of the picture contents in accordance with the script program in response to the occurrence of an event.

## Amended claims

### Amended claims under Art. 19.1 PCT

**1.** (Amended) A recording medium containing a plurality of picture streams so that the picture streams are reproduced on a reproducing apparatus,
the recording medium having an area for a reproduction status to be written into, the reproduction status being information for performing a continue play whereby a previously reproduced picture stream is reproduced from a point at which it is left off last time,
the recording medium further containing a script program which describes contents of control on reproduction of the picture streams by the reproducing apparatus, wherein
the script program includes commands for:
writing the reproduction status into the area of the recording medium when ending reproduction of a picture stream; and
referring to the reproduction status and causing the reproducing apparatus to perform a continue play in accordance with an event occurring in the reproducing apparatus when the same recording medium is operated in the reproducing apparatus again.

**2.** (Amended) The recording medium according to claim 1, wherein
the script program includes a first event handler for reproducing the picture streams from the beginning and a second event handler for referring to the reproduction status and performing a continue play, and
when causing the reproducing apparatus to reproduce the picture streams in the recording medium, the script program searches the recording medium for a reproduction status corresponding to the picture streams and causes the reproducing apparatus to execute either one of the two event handlers depending on the presence or absence of the corresponding reproduction status.

**3.** (Amended) The recording medium according to claim 2, further having an area for storing user data which is information dependent on the picture contents, and wherein
the script program causes the reproducing apparatus to perform a control using the user data when executing the second event handler.

**4.** (Amended) The recording medium according to claim 3, wherein the script program further includes a third event handler which is executed in accordance with an end event in the reproduction control unit and by which information on the reproduction status or the user data is manipulated.

**5.** (Amended) The recording medium according to any one of claims 1 to 4, wherein the script program causes a time of the picture stream under reproduction to be saved as the reproduction status.

**6.** (Amended) The recording medium according to claim 5, wherein the script program further includes a command for changing the time of the picture stream under reproduction and saving the changed time as the reproduction status.

**7.** (Amended) The recording medium according to any one of claims 1 to 6, wherein the script program causes the reproducing apparatus to perform one of a plurality of operations prepared in advance for a continue play, in accordance with the type of the picture streams.

**8.** (Amended) A picture reproducing apparatus comprising:
a reproduction control unit which reproduces a picture stream prerecorded on a recording medium; and
a script control unit which interprets and executes a script program prerecorded on the recording medium, the script program including a first event handler for reproducing the picture stream from the beginning and a second event handler for referring to a reproduction status and performing a continue play, wherein
the recording medium has an area for storing the reproduction status which is information for performing a continue play whereby previously reproduced picture streams are reproduced from a point at which they are left off last time,
wherein the script control unit writes the reproduction status into the area of the recording medium when ending reproduction of the picture stream, and
when operating the same recording medium on the reproducing apparatus again, the script control unit searches the recording medium for a reproduction status corresponding to the picture stream and causes the reproducing apparatus to execute either one of the two event handlers depending on the presence or absence of the corresponding reproduction status.

**9.** (Amended) The picture reproducing apparatus according to claim 8, wherein the script control unit has a default event handler to be executed when the script program does not include the second event handler.

**10.** (Added) A method for controlling reproduction of a plurality of picture streams recorded on a recording medium, comprising:
providing the recording medium with an area for a reproduction status to be written into, the reproduction status being information for performing a continue play whereby a previously reproduced picture stream is reproduced from a point at which it is left off last time;
recording a script program on the same medium as the picture streams are recorded, the script program including a first event handler for reproducing the picture streams from the beginning and a second event handler for referring to the reproduction status and performing a continue play;
writing the reproduction status into the area of the recording medium when ending reproduction of a picture stream; and
when operating the same recording medium on the reproducing apparatus again, searching the recording medium for a reproduction status corresponding to the picture streams and causing the reproducing apparatus to execute either one of the two event handlers depending on the presence or absence of the corresponding reproduction status.

**11.** (Added) A program for causing a reproducing apparatus to exercise contents of control on reproduction of a plurality of picture streams stored in a recording medium, the program being recorded on the same medium as the picture streams are recorded,
the recording medium being provided with an area for a reproduction status to be written into, the reproduction status being information for performing a continue play whereby a previously reproduced picture stream is reproduced from a point at which it is left off last time, wherein
the program:
includes a first event handler for reproducing the picture streams from the beginning and a second event handler for referring to the reproduction status and performing a continue play;
writes the reproduction status into the area of the recording medium when ending reproduction of a picture stream; and
when operating the same recording medium on the reproducing apparatus again, the program searches the recording medium for a reproduction status corresponding to the picture streams and causes the reproducing apparatus to execute either one of the two event handlers depending on the presence or absence of the corresponding reproduction status.
